# EUROPEAN PATENT APPLICATION

(11) **EP 3 767 549 A1**
(43) Date of publication of application: **20.01.2021**
(21) Application number: 20179119.1
(22) Date of filing: 10.06.2020
(51) Int. Cl.: G06N 3/063, G06N 3/04, G06N 3/08, G06N 20/00

(54) **DELIVERY OF COMPRESSED NEURAL NETWORKS**

(30) Priority: 03.07.2019 FI 20195606
(71) Applicant: Nokia Technologies Oy, 02610 Espoo (FI)
(72) Inventor: CRICRI, Francesco, 33100 Tampere (FI); AYTEKIN, Caglar, 33580 Tampere (FI)
(74) Representative: Nokia EPO representatives

(57) **Abstract**

Example embodiments provide efficient delivery of compressed neural networks between devices. A server may obtain a compressed neural network based on at least one requirement received from the client. The client may evaluate performance of the compressed neural network based on its own dataset, which may not be available to the server. The server may update the compressed neural network accordingly and the updated neural network may be provided to the client as a residual with respect to the compressed neural network that was delivered earlier. Apparatuses, methods, and computer programs are disclosed.

## Description

### TECHNICAL FIELD

The present application generally relates to artificial intelligence, machine learning, and neural networks. In particular, some embodiments of the present application relate to delivery of compressed representations of neural networks.

### BACKGROUND

Neural networks (NN) may be utilized for many different applications in many different types of devices, such as mobile phones. Examples of technologies include image and video analysis and processing, social media data analysis, device usage data analysis, or the like. A neural network is a computation graph comprising several layers of computation. A layer may comprise one or more units, for example nodes. Each unit may be configured to perform an elementary computation. A unit may be connected to one or more other units and this connection may be associated with a weight. The weight may be used for scaling the signal passing through the associated connection. Weights are an example of learnable parameters, which may be updated during a training process to train the neural network for a particular task. Running neural networks at a device or delivering neural networks between devices may require significant memory or bandwidth resources, which may not always be available.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments provide a system, where compressed neural networks may be efficiently delivered between devices, for example from a server to a client. This is achieved by the features of the independent claims. Further implementation forms are provided in the dependent claims, the description, and the drawings.

According to a first aspect, an apparatus comprises at least one processor; and at least one memory including computer program code; the at least one memory and the computer program code configured to, with the at least one processor, cause the apparatus at least to: receive a request for a neural network from a client, wherein the request comprises at least one requirement for the neural network; obtain a first compressed neural network based on the at least one requirement; transmit the first compressed neural network to the client device; obtain a second compressed neural network in response to receiving, from the client device, an indication that the first compressed neural network does not satisfy a performance requirement; and transmit a residual between the first compressed neural network and the second compressed neural network to the client.

According to a second aspect, a method comprises receiving a request for a neural network from a client, wherein the request comprises at least one requirement for the neural network; obtain a first compressed neural network based on the at least one requirement; transmitting the first compressed neural network to the client device; obtaining a second compressed neural network in response to receiving, from the client device, an indication that the first compressed neural network does not satisfy a performance requirement; and transmitting a residual between the first compressed neural network and the second compressed neural network to the client.

According to a third aspect, a computer program is configured, when executed by an apparatus, to cause the apparatus at least to: receive a request for a neural network from a client, wherein the request comprises at least one requirement for the neural network; obtain a first compressed neural network based on the at least one requirement; transmit the first compressed neural network to the client device; obtain a second compressed neural network in response to receiving, from the client device, an indication that the first compressed neural network does not satisfy a performance requirement; and transmit a residual between the first compressed neural network and the second compressed neural network to the client.

According to a fourth aspect, an apparatus comprises means for receiving a request for a neural network from a client, wherein the request comprises at least one requirement for the neural network; means for obtaining a first compressed neural network based on the at least one requirement; means for transmitting the first compressed neural network to the client device; means for obtaining a second compressed neural network in response to receiving, from the client device, an indication that the first compressed neural network does not satisfy a performance requirement; and means for transmitting a residual between the first compressed neural network and the second compressed neural network to the client.

According to a fifth aspect, an apparatus comprises at least one processor; and at least one memory including computer program code; the at least one memory and the computer program code configured to, with the at least one processor, cause the apparatus at least to: transmit a request for a neural network, wherein the request comprises at least one requirement for the neural network; receive a first compressed neural network; determine whether the first compressed neural network satisfies a performance requirement, when evaluated on a local dataset; transmit an indication that the first compressed neural network does not satisfy the performance requirement; receive a residual between the first compressed neural network and a second compressed neural network; and reconstruct the second compressed neural network based on the first compressed neural network and the residual.

According to a sixth aspect, a method comprises transmitting a request for a neural network, wherein the request comprises at least one requirement for the neural network; receiving a first compressed neural network; determine whether the first compressed neural network satisfies a performance requirement, when evaluated on a local dataset; transmitting an indication that the first compressed neural network does not satisfy the performance requirement; receiving a residual between the first compressed neural network and a second compressed neural network; and reconstructing the second compressed neural network based on the first compressed neural network and the residual.

According to a seventh aspect, a computer program is configured, when executed by an apparatus, to cause the apparatus at least to: transmit a request for a neural network, wherein the request comprises at least one requirement for the neural network; receive a first compressed neural network; determine whether the first compressed neural network satisfies a performance requirement, when evaluated on a local dataset; transmit an indication that the first compressed neural network does not satisfy the performance requirement; receive a residual between the first compressed neural network and a second compressed neural network; and reconstruct the second compressed neural network based on the first compressed neural network and the residual.

According to an eighth aspect, an apparatus comprises means for transmitting a request for a neural network, wherein the request comprises at least one requirement for the neural network; means for receiving a first compressed neural network; means for determining whether the first compressed neural network satisfies a performance requirement, when evaluated on a local dataset; means for transmitting an indication that the first compressed neural network does not satisfy the performance requirement; means for receiving a residual between the first compressed neural network and a second compressed neural network; and means for reconstructing the second compressed neural network based on the first compressed neural network and the residual.

Many of the attendant features will be more readily appreciated as they become better understood by reference to the following detailed description considered in connection with the accompanying drawings.

### DESCRIPTION OF THE DRAWINGS

The accompanying drawings, which are included to provide a further understanding of the example embodiments and constitute a part of this specification, illustrate example embodiments and together with the description help to explain the example embodiments. In the drawings:
FIG. 1 illustrates an example of a system for delivering compressed neural networks from a server to a client, according to an embodiment.
FIG. 2 illustrates an example of an apparatus configured to transmit and/or receive a compressed neural network, according to an example embodiment;
FIG. 3 illustrates an example of a neural network, according to an example embodiment;
FIG. 4 illustrates an example of an elementary computation unit, according to an example embodiment;
FIG. 5 illustrates an example of a convolutional neural network, according to an example embodiment;
FIG. 6 illustrates an example of transferring neural network(s) from a server to a client, according to an example embodiment;
FIG. 7 illustrates an example of a method for transmitting neural network(s) to a client, according to an example embodiment.
FIG. 8 illustrates an example of a method for receiving neural network (s) from a server, according to an example embodiment.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

According to an example embodiment a client may request a neural network from a server. The request may include requirements for the requested network, for example regarding size and performance of the network. After receiving the request from the client, the server may obtain a compressed neural network in accordance with the size indicated in the request. The server may further use its own local dataset to determine whether the performance requirement is satisfied. However, since the server may not have or be able to access the same dataset as the client, the performance of the compressed neural network may not be reliably assessed. Therefore, after receiving the compressed neural network from the server, the client may determine whether the compressed neural network satisfies the performance requirement with client's dataset. If not, the client may request an updated compressed network, which may be provided as a residual with respect to the first compressed neural network. The process may be iterated until a satisfactory size vs. performance trade-off has been achieved.

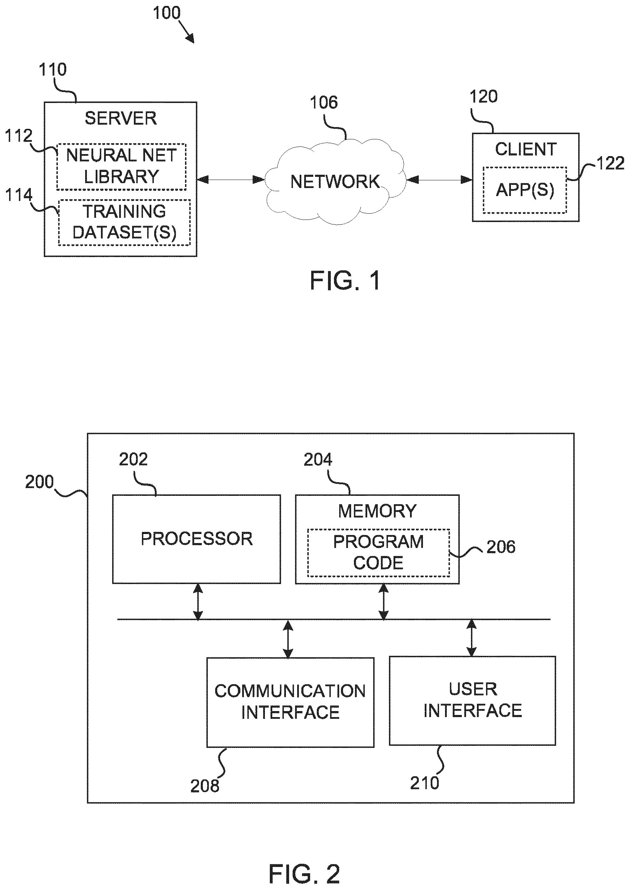

FIG. 1 illustrates an example of a system for transferring compressed neural networks between device, according to an embodiment. System 100 may comprise a server 110, which may be communicatively coupled to a client 120 over a communication network 106. Server 110 may comprise a neural network library 112 comprising one or more neural networks configured to perform various tasks. Each neural network of the library 112 may be associated with an identifier, for example a key or an index, such that a corresponding neural network may be retrieved from the neural network library 112 upon request. Server 110 may be further capable of training new neural networks as well as fine-tuning any existing neural network for a particular task, for example based on one or more training datasets 114. Neural network library 112 and/or the training datasets 114 may be located at a memory of server 110, or at a remote memory accessible to server 110.

The server 110 may further be capable of compressing any of the neural networks by various means. Neural network compression may refer to the compression of neural network's parameters, for example weights, which may form the biggest part in terms of bits required to represent the neural network. The other parts, for example, the architecture definition, may not require as many bits to be represented. This may be the case for example for big neural networks comprising a high number of layers and parameters. The input to the neural network compression system may be an original trained network, which may have been trained for example by using at least one task loss. A task loss may refer to a loss function that is minimized during training to achieve a desired output from the network, for example to train the neural network for a particular task.

Server 110 and client 120 may be implemented by various means. For example, server 120 may comprise a server device, server apparatus, server software, server cloud, or the like. Client 120 may comprise a client device, client apparatus, client software, or a client application downloadable to a client device.

Compressing neural networks may be desired for different reasons, such as for example for reducing bitrate required to transmit the network over a communication channel, for reducing storage requirements, for reducing memory consumption at runtime, or for reducing computational complexity at runtime, etc.

Performance of neural network compression may be assessed for example based on the reduction of the number of bits required to represent the neural network and on the degradation of task performance. A compression algorithm is expected to reduce the number of bits, or bitrate, as much as possible, while minimizing degradation of task performance. Task performance may refer to the performance on the task for which the network was trained, such as for example classification accuracy for a classifier or MSE for a network performing regression.

Several approaches may be used to compress neural networks. For example, some approaches may be based on quantization of weights, some approaches may be based on pruning (removing) small values, some approaches may be based on low-rank decompositions of weight matrices, and some approaches may include a training or retraining step. Regarding the latter, the retraining may be performed for each neural network that is subject to compression. This may include retraining the neural network to be compressed with a different loss with respect to the task loss that the network was originally trained with, such as with a combination of at least a task loss and a compression loss. The compression loss may be computed on the weights, for example to enforce pruning or sparsification, for example to enforce many weights to have low values, or to enforce easier quantizability, for example to enforce that weights values to be near quantization values. Such retraining may take a long time, for example up to one week even with most powerful hardware acceleration currently available.

Compression of a neural network may provide a neural network that is capable of performing the same task as the original network, but not necessarily with the same quality. The compressed neural network may be provided in a data format that enables reconstruction of the neural network from the compressed representation, for example, by inserting zeros to replace pruned weights. This may be done in accordance with received signaling information. If the compressed neural network is postprocessed, for example by entropy coding, corresponding inverse operation may be performed before applying the compressed neural network.

A client 120 may be configured with at least one application 122. Application 122 may use at least one neural network received from server 110 over network 106. Capabilities of client 120 may be limited with respect to available memory, computational power, battery power, or in general any resource needed to perform inference with the neural network. Client 120 may be also limited with respect to receiving or storing the neural network. For example, the client 120 could have limited communication capabilities even though a communication channel of network 106 itself would not be bandwidth-limited, for example because of other simultaneous communication sessions running at client 120.

Client 120 may comprise any functions to collect data subject to inference by a neural network. For example, client 120 may be equipped with one or more cameras configured to capture video or image content, one or more microphones configured to capture audio content, or one or more sensors to capture sensor data, for example information associated with acceleration, temperature, or the like. Alternatively, or additionally, client 120 may be configured to receive the data subject to inference from another device, for example from an accessory device such as a smartwatch, from an external camera, microphone or sensor, or an Internet-of-Things (IoT) device.

FIG. 2 illustrates an example of an apparatus 200 according to an embodiment, for example server 110 or client 120. Apparatus 200 may comprise at least one processor 202. The at least one processor may comprise, for example, one or more of various processing devices, such as for example a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

The apparatus may further comprise at least one memory 204. The memory may be configured to store, for example, computer program code or the like, for example operating system software and application software. The memory may comprise one or more volatile memory devices, one or more non-volatile memory devices, and/or a combination thereof. For example, the memory may be embodied as magnetic storage devices (such as hard disk drives, floppy disks, magnetic tapes, etc.), optical magnetic storage devices, or semiconductor memories (such as mask ROM, PROM (programmable ROM), EPROM (erasable PROM), flash ROM, RAM (random access memory), etc.).

Apparatus 200 may further comprise communication interface 208 configured to enable apparatus 200 to transmit and/or receive information, for example messages to/from other devices. In one example, apparatus 200 may use communication interface 208 to transmit or receive compressed neural networks and/or control messages associated with provision of the compressed neural networks. The communication interface may be configured to provide at least one wireless radio connection, such as for example a 3GPP mobile broadband connection (e.g. 3G, 4G, 5G); a wireless local area network (WLAN) connection such as for example standardized by IEEE 802.11 series or Wi-Fi alliance; a short range wireless network connection such as for example a Bluetooth, NFC (near-field communication), or RFID connection; a local wired connection such as for example a local area network (LAN) connection or a universal serial bus (USB) connection, or the like; or a wired Internet connection.

Apparatus 200 may further comprise a user interface 210 comprising an input device and/or an output device. The input device may take various forms such a keyboard, a touch screen, or one or more embedded control buttons. The output device may for example comprise a display, a speaker, a vibration motor, or the like.

When the apparatus is configured to implement some functionality, some component and/or components of the apparatus, such as for example the at least one processor and/or the memory, may be configured to implement this functionality. Furthermore, when the at least one processor is configured to implement some functionality, this functionality may be implemented using program code 206 comprised, for example, in the memory 204.

The functionality described herein may be performed, at least in part, by one or more computer program product components such as software components. According to an embodiment, the apparatus comprises a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), application-specific Integrated Circuits (ASICs), application-specific Standard Products (ASSPs), System-on-a-chip systems (SOCs), Complex Programmable Logic Devices (CPLDs), Graphics Processing Units (GPUs).

The apparatus comprises means for performing at least one method described herein. In one example, the means comprises the at least one processor, the at least one memory including program code configured to, when executed by the at least one processor, cause the apparatus to perform the method.

Apparatus 200 may comprise for example a computing device such as for example a server, mobile phone, a tablet computer, a laptop, an internet of things (IoT) device, or the like. Examples of IoT devices include, but are not limited to, consumer electronics, wearables, sensors, and smart home appliances. In one example, apparatus 200 may comprise a vehicle such as for example a car. Although apparatus 200 is illustrated as a single device it is appreciated that, wherever applicable, functions of apparatus 200 may be distributed to a plurality of devices, for example to implement example embodiments as a cloud computing service.

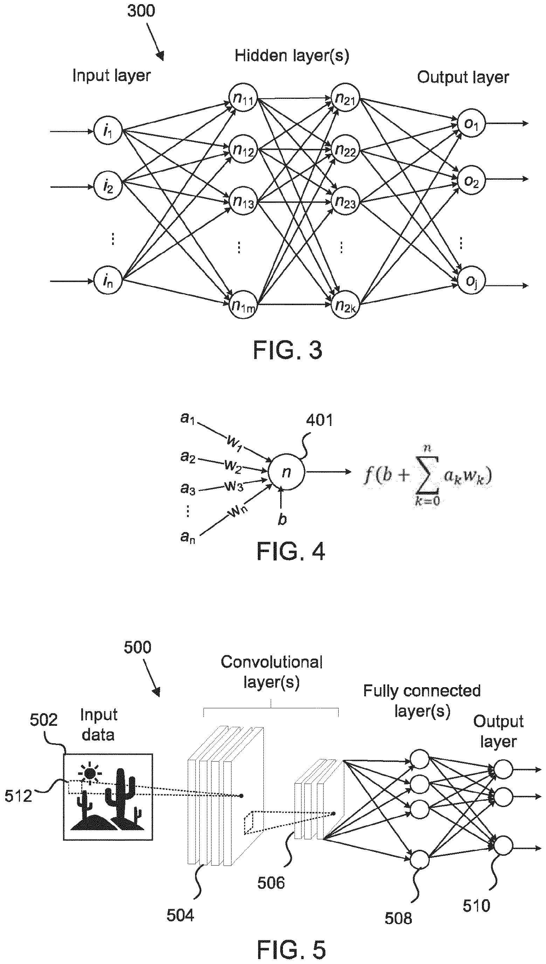

FIG. 3 illustrates an example of a neural network 300, according to an embodiment. Neural network 300 may comprise an input layer, one or more hidden layers, and an output layer. Nodes of the input layer, *i*₁ to *i*ₙ, may be connected to one or more of the *m* nodes of the first hidden layer, *n*₁₁ to *n*₁ₘ. Nodes of the first hidden layer may be connected to one or more of the *k* nodes of the second hidden layer, *n*₂₁ to *n*₂ₖ. It is appreciated that even though the example neural network of FIG. 1 illustrates two hidden layers, a neural network may apply any number and any type of hidden layers. Neural network 300 may further comprise an output layer. Nodes of the last hidden layer, in the example of FIG. 3 the nodes of second hidden layer, may be connected to one or more nodes of the output layer, *o*₁ to *o*ⱼ. It is noted that the number of nodes may be different for each layer of the network. A node may be also referred to as a neuron, a unit, a computation unit, or an elementary computation unit. Terms network, neural network, neural net, or model may be used interchangeably. Weights of the neural network may be referred to as learnable parameters or simply as parameters. In the example of FIG. 2, one or more of the layers may be fully connected layers, for example layers where each node is connected to every node of a previous layer. A fully connected layer may be represented for example as a matrix, where the number of rows is the dimensionality of the input activations, and the number of columns is the number of output activations.

Two example architectures of neural networks include feed-forward and recurrent architectures. Feed-forward neural networks are such that there is no feedback loop. Each layer takes input from one or more previous layers and provides its output as the input for one or more of the subsequent layers. Also, units inside certain layers may take input from units in one or more of preceding layers and provide output to one or more of following layers.

Initial layers, for example layers close to the input data, may extract semantically low-level features. In an example of image data, the low-level features may correspond to edges and textures in images. Intermediate and final layers may extract more high-level features. After the feature extraction layers there may be one or more layers performing a certain task, such as classification, semantic segmentation, object detection, denoising, style transfer, super-resolution, or the like.

In recurrent neural networks there is a feedback loop from one or more nodes of one or more subsequent layers. This causes the network to become stateful. For example, the network may be able to memorize information or a state.

FIG. 4 an example of a node 401. A node may be configured to receive one or more inputs, *a*₁ to *a*ₙ, from one or more nodes of one or more previous layers and compute an output based on the input values received. A node may also receive feedback from one or more nodes of one or more subsequent layers. Inputs may be associated with parameters to adjust the influence of a particular input to the output. For example weights *w*₁ to *w*ₙ associated with the inputs *a*₁ to *a*ₙ may be used to multiply the input values *a*₁ to *a*ₙ. The node may be further configured combine the inputs to an output, or an activation. For example, the node may be configured to sum the modified input values. A bias or offset *b* may be also applied to add a constant to the combination of modified inputs. Weights and biases may be learnable parameters. For example, when the neural network is trained for a particular task, the values of the weights and biases associated with different inputs and different nodes may be updated such that an error associated with performing the task is reduced to an acceptable level.

Furthermore, an activation function *f*() may be applied to control when and how the node 401 provides its output. Activation function may be for example a non-linear function that is substantially linear in the region of zero but limits the output of the node when the input increases or decreases. Examples of activation functions include, but are not limited to, a step function, a sigmoid function, a tanh function, a ReLu (rectified linear unit) function. The output may be provided to nodes of one or more following layers of the network, and/or to one or more nodes of one or more previous layers of the network.

A forward propagation or a forward pass may refer to feeding a set of input data through the layers of the neural network 300 and producing an output. During this process the weights and biases of the neural network 300 affect the activations of individual nodes and finally the output provided by the output layer.

One property of neural networks and other machine learning tools is that they are able to learn properties from input data, for example in supervised way or in unsupervised way. Learning may be based on teaching the network by a training algorithm or based on a meta-level neural network providing a training signal.

In general, a training algorithm may include changing some properties of the neural network such that its output becomes as close as possible to a desired output. For example, in the case of classification of objects in images, the output of the neural network may be used to derive a class or category index, which indicates the class or category that the object in the input image belongs to. Training may happen by minimizing or decreasing the output's error, also referred to as the loss.

During training the generated or predicted output may be compared to a desired output, for example ground-truth data provided for training purposes, to compute an error value. The error may be calculated based on a loss function. Updating the neural network may be then based on calculating a derivative with respect to learnable parameters of the network. This may be done for example using a backpropagation algorithm that determines gradients for each layer starting from the final layer of the network until gradients for the learnable parameters have been obtained. Parameters of each layer are updated accordingly such that the loss is iteratively decreased. Examples of losses include mean squared error, cross-entropy, or the like. In deep learning, training comprises an iterative process, where at each iteration the algorithm modifies parameters of the neural network to make a gradual improvement of the network's output, that is, to gradually decrease the loss.

Training phase of the neural network may be ended after reaching an acceptable error level. Inference phase may refer to applying the trained neural network for a particular task. For example, to provide a classification of an unseen image to one of a plurality of classes based on content of an input image.

Training a neural network may be seen as an optimization process, but the final goal may be different from a typical goal of optimization. In optimization, the goal may be to minimize a functional. In machine learning, a goal of the optimization or training process is to make the model learn the properties of the data distribution from a limited training dataset. In other words, the goal is to learn to use a limited training dataset in order to learn to generalize to previously unseen data, that is, data which was not used for training the model. This may be referred to as generalization.

In some examples, data may be split into at least two sets, a training data set and a validation data set. The training data set may be used for training the network, for example to modify its learnable parameters in order to minimize the loss. The validation data set may be used for checking performance of the network on data which was not used to minimize the loss as an indication of the final performance of the model. In particular, the errors on the training set and on the validation data set may monitored during the training process to understand the following issues: 1) if the network is learning at all - in this case, the training data set error should decrease, otherwise the model is in the regime of underfitting; 2) if the network is learning to generalize - in this case, also the validation set error should decrease and not be much higher than the training data set error. If the training data set error is low, but the validation data set error is much higher than the training data set error, or it does not decrease, or it even increases, the model is in the regime of overfitting. This means that the model has just memorized properties of the training data set and performs well on that set, but performs poorly on a set not used for tuning its parameters.

FIG. 5 illustrates an example of a convolutional neural network 500. A convolutional neural network 500 may comprise at least one convolutional layer. A convolutional layer may perform convolution type of operations to extract information from input data, for example image 502, to form a plurality of feature maps 504. A feature map may be generated for example based on applying a filter or a kernel to a subset of input data, for example block 512 in image 502, and sliding the filter through the input data to obtain a value for each element of the feature map. The filter may comprise a matrix or a tensor, which may be for example multiplied with the input data to extract features corresponding to that filter. A plurality of feature maps may be generated based on applying a plurality of filters. A further convolutional layer may take as input the feature maps from a previous layer and apply similar filtering process on the feature maps 504 to generate another set of feature maps 506. Weights of the filters may be learnable parameters and they may be updated during a training phase, similar to parameters of neural network 300. Similar to node 401, an activation function may be applied to the output of the filter(s). The convolutional neural network may further comprise one or more other type of layers such as for example fully connected layers 508 after and/or between the convolutional layers. An output may be provided by an output layer 510.

An architecture of a neural network may refer to the type, size, and relationships of the neural network layers. An example of a neural network having a particular architecture is ResNet50. This network may be trained for many different tasks. During training the learnable parameters, such as for example weights, filter values, biases, or the like, may be updated. However, during training the architecture of the network may be preserved. Neural network architectures may be enumerated. For example, server 110 and client 120 may exchange information, for example a look-up table, to assign identifiers for different architectures.

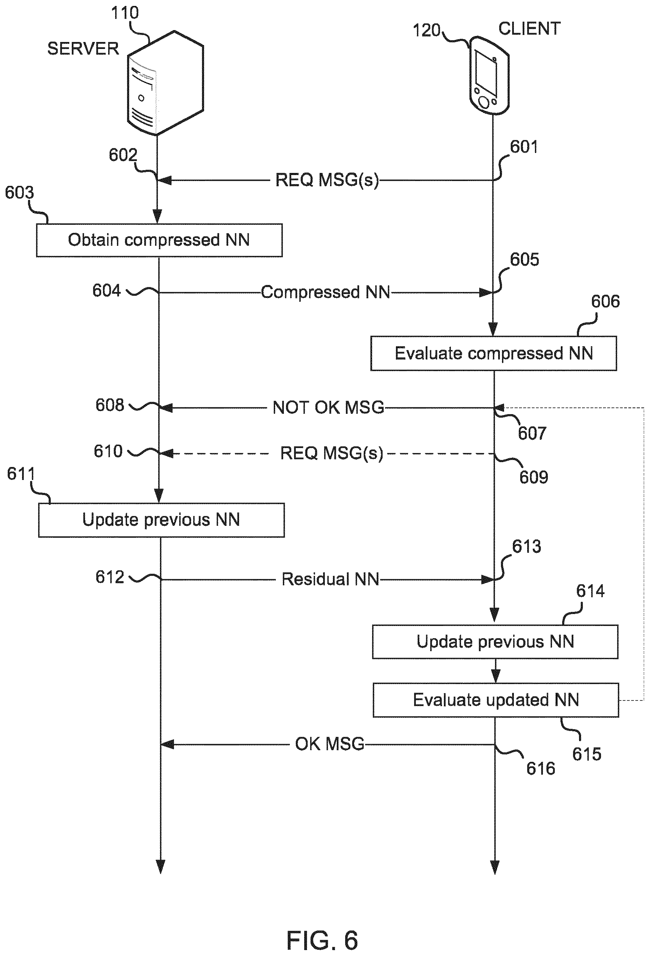

FIG. 6 illustrates an example of delivering neural network(s) from a server 110 to a client 120, according to an embodiment. Client 120 may initially determine that it needs to perform a task. This may be for example during an execution of an application 122 at the client 120, upon obtaining data subject to inference by a neural network, or upon a request from a user.

At 601, client 120 may determine to transmit a request for a neural network. The request may for example comprise a request message (REQ MSG) or a request signal. The request may comprise one or more request messages or signals and the information included in the request may be distributed among the one or more request messages or signals.

According to an example embodiment, the request may comprise a size associated with the requested neural network. The size may for example comprise a memory limit for the neural network. The size may be determined by the client 120 based on memory available at the client 120. The available memory may refer to a total amount of memory available at the client 120 or an amount of memory allocated for executing the neural network, for example an amount of memory allocated to an application 122. Size of the neural network may be provided in various formats, for example as number of bits or bytes, number of nodes, or the like.

According to an example embodiment, the request may comprise an identifier of a task to be performed by the neural network. For example, a particular identifier, for example an integer value, may be associated with a particular task, such as for example image classification. Alternatively, name of the task may be included in the request as a string of characters.

According to an example embodiment the request may comprise an identifier, for example a key or an index, of an architecture of the neural network. The architecture may be provided for example as a number of layers, type of layers, numbers of nodes at the layers, parameters of filters, or the like. Alternatively, an architecture may be identified based on a reference to a predefined architecture, such as for example ResNet50. The reference may be provided as an identifier, for example an integer number, or as a string of characters.

According to an example embodiment the request may comprise at least one performance requirement for the neural network. The performance requirement may be associated with the task indicated by the identifier of the task included in the request. The performance requirement may be provided in any suitable format. For example, for image classification the performance requirement may comprise an accuracy in the image classification task. This may be provided for example as a percentage of correct classifications, such as for example 94 out of 100. In another example, for an image compression task, the performance requirement may be expressed as mean-square-error (MSE) between the output image and a ground-truth image.

At 602, server 110 may receive the request for the neural network from the client 120. At 603, the server 110 may obtain a first compressed neural network. Obtaining the first compressed network may be based on the at least one requirement included in the request. According to an example embodiment, obtaining the first compressed neural network may comprise retrieving a compressed neural network that complies with the request from a memory of server 110, or requesting such network form an external device.

According to an example embodiment, the first compressed neural network may be obtained by compressing a neural network retrieved from memory of server 110 or requested form an external device. Target of the compression may be to obtain a smallest reasonable network (SRN), which satisfies the performance requirement on an annotated dataset possessed by or accessible to the server 110. The neural network subject to compression may be referred to as an original neural network, although it is appreciated that the original neural network may have been subject to one or more previous compression steps or other processing steps. According to an embodiment, the server 110 may select the original network based on the identifier of the neural network or the identifier of the architecture of the neural network. For example, if the request indicates ResNet50, server 110 may retrieve ResNet50 from its neural network library 112. According to an example embodiment, the server 110 may select the original neural network based on the identifier of the task. For example, the server 110 may be configured with a mapping between a plurality of tasks and a plurality of networks. For example, if the request indicates that the task is image classification. The server 110 may be configured to select ResNet50 as the original neural network.

Server 110 may determine parameters for compressing the original neural network based on the size and/or the performance requirement indicated in the request. In some embodiments, the performance, for example accuracy, may not be considered by the server 110. Instead, the memory or bandwidth requirement may be considered without considering the performance. In some embodiments, the performance requirement on the data available locally at the server side may be predefined, for example a default performance requirement, whereas in other embodiments the performance requirement may be received from the client 120. Alternatively, or additionally, a bandwidth requirement associated with a communication channel of network 106 may be considered when determining the compression parameters.

Based on the at least one requirement, server 110 may compress the original network to obtain a suitable compressed neural network. For example, server 110 may select a pruning threshold and number of clusters, k, in a k-means based compression method such that when pruned and quantized the compressed network will satisfy the size or bandwidth, and/or performance requirement(s). For example, a default performance requirement or received performance requirement may be 90 percent of the performance of the original model. The compressed network may be for example represented by using a binary tensor indicating positions of zeros (pruned weights), another tensor containing the non-pruned and quantized weights in the form of cluster labels, and a mapping between cluster labels and centroid values, for example a dictionary or a look-up table. However, any other suitable representation of a compressed neural network may be used.

Operation 603 may further comprise determining whether the compressed neural network satisfies the at least one requirement included in the request received from the client 120. For example, server 110 may compare size of the compressed network to the size indicated in the request, and determine to send the compressed neural network to client 120 if the size is less than or equal to the size indicated in the request. According to an example embodiment, server 110 may determine whether the compressed neural network satisfies the at least one performance requirement included in the request. This may be based on performing inference on a server dataset, for example a local dataset available to server 110.

It is noted that even if performance, when evaluated with the local dataset of the server 110, satisfies the performance requirement, this does not necessarily imply satisfying the performance requirement at the client 120, when inference is performed at the client 120 with a different dataset.

At 604, server 110 may transmit the compressed neural network to client 120. Transmitting the compressed neural network may be in response to determining that the compressed neural network satisfies, at least substantially, the at least one performance requirement, size, and/or other requirements.

At 605, the client 120 may receive the compressed neural network from server 110. The client 120 may then reconstruct the compressed neural network based on the received representation. For example, the client 120 may insert zeros or other predetermined values to certain locations, as indicated in signaling information received within or along the representation of the compressed neural network. The indicated locations may correspond to pruned weights. Alternatively, the client 120 may prune the weights based on the zeros indicated by the server. Non-pruned weights may be replaced for example by cluster centroids depending on the label vector that is sent for each weight.

At 606, the client 120 may evaluate the compressed neural network to determine whether it satisfies the performance requirement and/or other requirements. Evaluating the performance may be done based on a client dataset, which may comprise a local dataset available to client 120. As discussed above, the client dataset may be different from the server dataset. The server dataset and client datasets may be annotated datasets.

In response to determining that the compressed neural network satisfies the at least one performance requirement, the client 120 may directly proceed to operation 616 to acknowledge reception of an acceptable neural network, for example by sending an "OK" message to server 110.

In response to determining that the compressed neural network does not satisfy the at least one performance requirement, the client 120 may transmit an indication that the compressed neural network does not satisfy at least one performance requirement, for example a "NOT OK" message at operation 607.

Alternatively, or additionally, at 609 client 120 may send a second request, for example a second request message or a second request signal, to server 110. The second request may comprise an indication of a required performance improvement. The indication of the required performance improvement may be provided with respect to the compressed neural network received from server 110 at 605. The indication of the required performance improvement may comprise at least one of: a performance of the first compressed neural network, when evaluated based on a client dataset; or a difference between the performance requirement and the performance of the first compressed neural network, when evaluated by the client 120 on the client dataset. For example, the client 120 may indicate that the performance with the client dataset is 91/100, which is lower than the required performance 94/100. Alternatively, the client 120 may indicate that the performance with the client dataset is 3/100 lower than the required performance.

At 608, the server 110 may receive the indication that the compressed neural network does not satisfy at least one performance requirement. Alternatively, or additionally, at 610 the server 110 may receive the second request from client 120. Based on the indication received at 608 and/or the second request at 610, the server 110 may determine to obtain an updated neural network, for example a second compressed neural network, in order to satisfy the at least one performance requirement also with the client dataset. If server 110 does not receive the second request, it may use a default performance improvement when obtaining the updated compressed neural network.

At 611, the server 110 may update the compressed neural network. Starting from a previous neural network (PNN) that was sent to the client 120, for example the first compressed neural network, the server 110 may obtain a residual, for example a residual weight vector, to be added to the PNN. The resulting network should still satisfy the bandwidth and/or size requirement. In general, a PNN may refer to a network that is obtainable from an initial network, for example the smallest reasonable network (SRN), by adding all previous residuals sent to the client 120. The neural network obtained based on adding the residual to the PNN, for example the second compressed neural network, should increase performance on the server dataset.

Depending on the method that the server uses and depending on the availability of the information, the server 110 may use the PNN's performance and the received requirement of performance improvement to update the network. For example, server 110 may determine a second pruning threshold (thr) and/or second quantization hyperparameter(s), for example a number of clusters (k) to improve performance of the first compressed neural network. Determining the second pruning threshold and/or the second quantization hyperparameter(s) may be based on the required performance improvement included in the second request. A weight update may be obtained based on the pruning and the quantization process that is applied in this stage compared to the previous stage. For example, if in the previous stage thr=0.001 and k=32 were applied and during this stage thr=0.0005 and k=32 were applied there may be two options: A) the new weights that are not pruned in this stage but were pruned in the previous stage can be sent to the device with the labels for these weights calculated according to the previous cluster centroids. B) the server 110 may decide to recalculate the quantization cluster centroids and labels for every non-pruned weight may be recalculated and sent.

At 612, the server 110 may transmit a residual between the first compressed neural network and the second compressed neural network to the client 120. According to an example embodiment, the residual may comprise non-pruned weights which were not transmitted to the client 120 as part of the first compressed neural network. According to an example embodiment, the residual may comprise a difference between non-pruned weights of the first compressed neural network and the non-pruned weights of the second compressed neural network. The latter may be applied for example if different quantization cluster centroids are used when generating the second compressed neural network. According to an example embodiment, the residual may comprise all non-pruned weights. The latter may be applied for example if different quantization cluster centroids are used when generating the second compressed neural network. For the cases where the server 110 recomputes the centroids, a new map between centroids and labels may be sent to the client 120.

According to an example embodiment, the size of the second compressed neural network may be higher than the size of the first compressed neural network. Furthermore, performance of the second compressed neural network may be higher than performance of the first compressed neural network, when evaluated either based on the server dataset or the client dataset.

At 613, the client 120 may receive the residual, for example a residual between the first compressed neural network and the second compressed neural network.

At 614, the client 120 may update the previous neural network. For example, the client 120 may reconstruct a second compressed neural network based on the previously received first compressed neural network and the residual. This may be done for example based on reconstructing the received residual and adding the reconstructed residual to the first compressed neural network. If the residual includes only the non-pruned weights which were previously not transmitted to the client 120, client 120 may replace pruned weights with the centroid values associated to the newly-received non-pruned weights' labels. If a new map between labels and centroids is received (e.g., a look-up table, a dictionary, etc.), client 120 may determine that all non-pruned weights were transmitted to client 120 (instead of only the new non-pruned weights), and thus it may replace all non-pruned weights with the centroid values (from the new map) associated to the non-pruned weights' labels.

At 615, the client 120 may evaluate performance of the updated neural network, for example the second compressed neural network, on the client dataset, similar to operation 606.

In response to determining that the updated neural network still does not satisfy the at least one performance requirement, the client 120 may proceed to operation 607 and/or operation 609 to provide an indication of the updated neural network not satisfying the performance requirement and/or the required performance improvement.

In response to determining that the updated neural network satisfies the at least one performance requirement, the client 120 may acknowledge reception of an acceptable neural network, for example by transmitting an "OK" message to server 110. According to an example embodiment, sending the "OK" message may be optional. In this case the client 120 may start using the updated compressed neural network without acknowledging it to server 110. If not receiving a further request from the client 120, the server 110 may determine that the updated compressed neural network was satisfactory.

The procedure of FIG. 6 may be generalized to a dynamic use case, where available bandwidth and/or memory changes over time. The server 110 and/or client 120 may be therefore configured monitor bandwidth and/or memory limitations over time. According to an example embodiment, the procedure of delivering an updated compressed neural network may be triggered based on a change in available bandwidth and/or memory. For example, in response to reallocation of memory at client 120, for example as a result of launching another application 122, the client 120 may transmit a request message to obtain a more compressed neural network from server 110.

Other requirements that may be considered when providing compressed neural networks include computational complexity, which may determine speed of inference. For example, client 120 may require a neural network that is able to perform an inference step on its hardware within a period, for example within 100 ms. Therefore, a request for a neural network may comprise a required time period for performing inference with the neural network. The time period may be expressed for example with respect to a reference hardware, for which an execution speed is known. According to an example embodiment, the request may indicate a computational complexity, for example a maximum complexity that is not to be exceeded. The computational complexity may be expressed for example as number of operations, for example multiplication or additions, needed to perform inference.

Example embodiments improve delivery of compressed neural networks between devices. Example embodiments are beneficial for example when the devices do not share the same dataset for evaluating performance of the compressed neural network. Delivering a residual of the updated neural network with respect to a previous neural network reduces required transmission resources. Applying the residual may be useful when optimizing the size of the compressed neural network iteratively. Example embodiments further enable dynamically adapting resources needed for performing inference on a neural network.

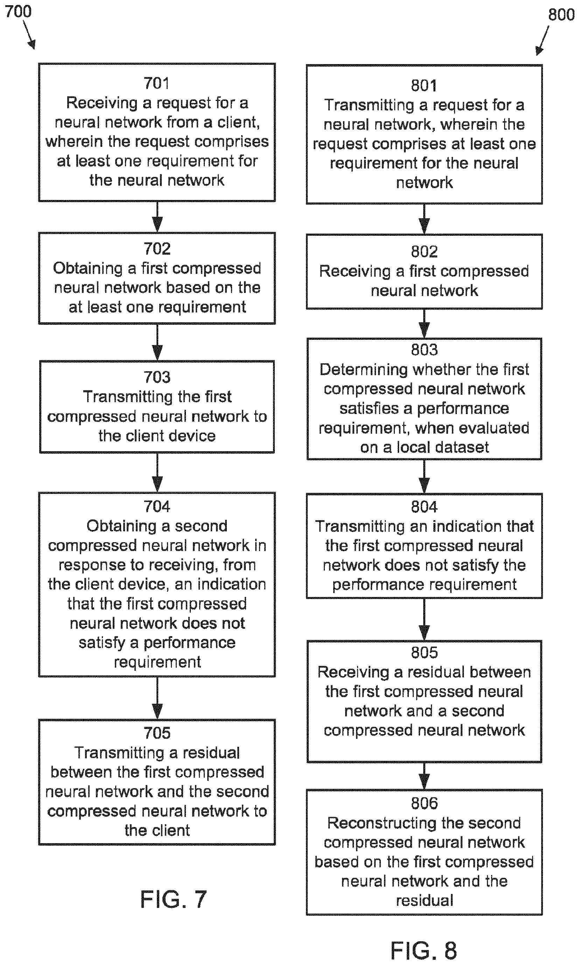

FIG. 7 illustrates an example of a method 700 for transmitting neural network(s) to a client, according to an example embodiment.

At 701, the method may comprise receiving a request for a neural network from a client, wherein the request comprises at least one requirement for the neural network.

At 702, the method may comprise obtaining a first compressed neural network based on the at least one requirement.

At 703, transmitting the first compressed neural network to the client device.

At 704, obtaining a second compressed neural network in response to receiving, from the client device, an indication that the first compressed neural network does not satisfy a performance requirement.

At 705, the method may comprise transmitting a residual between the first compressed neural network and the second compressed neural network to the client.

FIG. 8 illustrates an example of a method 800 for requesting and receiving neural network(s) form a server, according to an example embodiment.

At 801, the method may comprise transmitting a request for a neural network, wherein the request comprises at least one requirement for the neural network.

At 802, the method may comprise receiving a first compressed neural network.

At 803, the method may comprise determining whether the first compressed neural network satisfies a performance requirement, when evaluated on a local dataset.

At 804, the method may comprise transmitting an indication that the first compressed neural network does not satisfy the performance requirement.

At 805, the method may comprise receiving a residual between the first compressed neural network and a second compressed neural network.

At 806, the method may comprise reconstructing the second compressed neural network based on the first compressed neural network and the residual.

Further features of the methods directly result from the functionalities and parameters of the server 110 and/or client 120 as described in the appended claims and throughout the specification and are therefore not repeated here.

An apparatus, for example server 110 or client 120 may be configured to perform or cause performance of any aspect of the method(s) described herein. Further, a computer program may comprise instructions for causing, when executed, an apparatus to perform any aspect of the method(s) described herein. Further, an apparatus may comprise means for performing any aspect of the method(s) described herein. According to an example embodiment, the means comprises at least one processor, and memory including program code, the at least one processor, and program code configured to, when executed by the at least one processor, cause performance of any aspect of the method(s) .

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

Although subjects may be referred to as 'first' or 'second' subjects, this may not necessarily indicate any order or importance of the subjects. Instead, such attributes may be used solely for the purpose of making a difference between subjects.

As used in this application, the term 'circuitry' may refer to one or more or all of the following: (a) hardware-only circuit implementations (such as implementations in only analog and/or digital circuitry) and (b) combinations of hardware circuits and software, such as (as applicable):(i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims.

As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. An apparatus, comprising:
at least one processor; and
at least one memory including computer program code;
the at least one memory and the computer program code configured to, with the at least one processor, cause the apparatus at least to:
receive a request for a neural network from a client, wherein the request comprises at least one requirement for the neural network;
obtain a first compressed neural network based on the at least one requirement;
transmit the first compressed neural network to the client device;
obtain a second compressed neural network in response to receiving, from the client device, an indication that the first compressed neural network does not satisfy a performance requirement; and
transmit a residual between the first compressed neural network and the second compressed neural network to the client.

2. The apparatus according to claim 1, wherein the at least one requirement comprises at least one of:
a size associated with the neural network;
an identifier of a task to be performed by the neural network;
an identifier of an architecture of the neural network;
an identifier of the neural network; or
the performance requirement.

3. The apparatus according to claim 2, wherein the apparatus is further caused to:
determine that the first compressed neural network satisfies the performance requirement based on a local dataset.

4. The apparatus according to claim 3, wherein size of the second compressed neural network is higher than the size of the first compressed neural network, and wherein performance of the second compressed neural network is higher than the performance of the first compressed neural network, when evaluated based on the local dataset.

5. The apparatus according to any of claims 2 to 4, wherein the apparatus is further caused to:
receive, from the client, a second request comprising an indication of a required performance improvement comprising at least one of:
a performance of the first compressed neural network, when evaluated based on a client dataset; or
a difference between the performance requirement and the performance of the first compressed neural network, when evaluated by the client on a client dataset.

6. The apparatus according to any preceding claim, wherein the apparatus is further caused to obtain the second compressed neural network by updating the first compressed neural network.

7. An apparatus comprising:
at least one processor; and
at least one memory including computer program code;
the at least one memory and the computer program code configured to, with the at least one processor, cause the apparatus at least to:
transmit a request for a neural network, wherein the request comprises at least one requirement for the neural network;
receive a first compressed neural network;
determine whether the first compressed neural network satisfies a performance requirement, when evaluated on a local dataset;
transmit an indication that the first compressed neural network does not satisfy the performance requirement;
receive a residual between the first compressed neural network and a second compressed neural network; and
reconstruct the second compressed neural network based on the first compressed neural network and the residual.

8. The apparatus according to claim 7, wherein the at least one requirement for the neural network comprises at least one of:
a size associated with the neural network;
an identifier of a task to be performed by the neural network;
an identifier of an architecture of the neural network;
an identifier of the neural network; or
the performance requirement.

9. The apparatus according to claim 7 or claim 8, wherein the first compressed neural network and the second compressed neural network are received from a server, wherein a size of the second compressed neural network is higher than a size of the first compressed neural network, and wherein performance of the second compressed neural network is higher than the performance of the first compressed neural network, when evaluated by the server on a server dataset.

10. The apparatus according to any of claims 7 to 9, wherein the apparatus is further caused to:
transmit a second request comprising an indication of a required performance improvement comprising at least one of:
a performance of the first compressed neural network, when evaluated on the local dataset; or
a difference between the performance requirement and the performance of the first compressed neural network, when evaluated on the local dataset.

11. A method, comprising:
receiving a request for a neural network from a client, wherein the request comprises at least one requirement for the neural network;
obtaining a first compressed neural network based on the at least one requirement;
transmitting the first compressed neural network to the client device;
obtaining a second compressed neural network in response to receiving, from the client device, an indication that the first compressed neural network does not satisfy a performance requirement; and
transmitting a residual between the first compressed neural network and the second compressed neural network to the client.

12. A method, comprising:
transmitting a request for a neural network, wherein the request comprises at least one requirement for the neural network;
receiving a first compressed neural network;
determining whether the first compressed neural network satisfies a performance requirement, when evaluated on a local dataset;
transmitting an indication that the first compressed neural network does not satisfy the performance requirement;
receiving a residual between the first compressed neural network and a second compressed neural network; and
reconstructing the second compressed neural network based on the first compressed neural network and the residual.

13. A computer program comprising program code configured to cause an apparatus at least to:
receive a request for a neural network from a client, wherein the request comprises at least one requirement for the neural network;
obtain a first compressed neural network based on the at least one requirement;
transmit the first compressed neural network to the client device;
obtain a second compressed neural network in response to receiving, from the client device, an indication that the first compressed neural network does not satisfy a performance requirement; and
transmit a residual between the first compressed neural network and the second compressed neural network to the client.

14. A computer program comprising program code configured to cause an apparatus at least to:
transmit a request for a neural network, wherein the request comprises at least one requirement for the neural network;
receive a first compressed neural network;
determine whether the first compressed neural network satisfies a performance requirement, when evaluated on a local dataset;
transmit an indication that the first compressed neural network does not satisfy the performance requirement;
receive a residual between the first compressed neural network and a second compressed neural network; and
reconstruct the second compressed neural network based on the first compressed neural network and the residual.
